# EUROPÄISCHE PATENTANMELDUNG

(11) **EP 2 790 291 A1**
(43) Veröffentlichungstag der Anmeldung: **15.10.2014**
(21) Anmeldenummer: 13162703.6
(22) Anmeldetag: 08.04.2013
(51) Int. Cl.: H02J 9/06, H02J 9/08

(54) **Unterbrechungsfreie Stromversorgung und Netzersatzanlage**

(71) Anmelder: Siemens Aktiengesellschaft, 80333 München (DE)
(72) Erfinder: Schmidt, Hans-Klaus, 90579 Langenzenn (DE)

(57) **Zusammenfassung**

Die Erfindung betrifft eine unterbrechungsfreie Stromversorgung (1), umfassend ein Basisgerät (2), ein Batteriemodul (3), einen Eingangsklemmbereich (4) zum Anschluss an ein Einspeise-Netz (5), einen Ausgangsklemmbereich (6) zum Anschluss eines elektrischen Verbrauchers (7) ausgestaltet den Verbraucher (7) zu versorgen und zusätzlich bei Störungen in einer Versorgungsspannung des Einspeise-Netzes (5) die Versorgung des elektrischen Verbrauchers (7) mittels des Batteriemoduls (3) sicherzustellen. Erfindungsgemäß ist vorgesehen, dass durch ein Eigenstartmittel (10), umfassend einen Signaleingang (11), eine Auswerteeinheit (12), ein Mittel (13) zum Bereitstellen einer Hilfsspannung (15), ausgestaltet um ein Aufschalten des an den Ausgangsklemmbereich (6) angeschlossenen Verbrauchers (7) ohne Vorhandensein des Einspeise-Netzes (5) zu ermöglichen.

## Beschreibung

Die Erfindung betrifft eine unterbrechungsfreie Stromversorgung, umfassend ein Basisgerät, ein Batteriemodul, einen Eingangsklemmbereich zum Anschluss an ein Einspeise-Netz, einen Ausgangsklemmbereich zum Anschluss eines elektrischen Verbrauchers ausgestaltet, den Verbraucher zu versorgen und zusätzlich bei Störungen in einer Versorgungsspannung des Einspeise-Netzes die Versorgung des elektrischen Verbrauchers mittels des Batteriemoduls sicherzustellen.

Des Weiteren betrifft die Erfindung eine Netzersatzanlage unabhängig von einem öffentlichen Stromnetz mit der unterbrechungsfreien Stromversorgung.

Bei bekannten unterbrechungsfreien Stromversorgungen ist es von Nachteil, dass diese ohne Vorhandensein eines Einspeise-Netzes, welches eine Versorgungsspannung für den Betrieb der unterbrechungsfreien Stromversorgung bereitstellt, nicht oder nur unter erschwerten Bedingungen eingeschaltet werden können, um auch ohne das Vorhandensein eines Einspeise-Netzes bzw. dessen Versorgungsspannung in einen ordnungsgemäßen Betrieb übergehen zu können, soll eine Lösung gefunden werden.

Als Sonderlösung wurde bisher beispielsweise ein Plus-Eingang der unterbrechungsfreien Stromversorgung über einen Leistungsschalter, der in der Lage sein muss, einen Einschaltstrom schalten zu können, mit dem Pluspol des Batteriemoduls verbunden. Dabei musste eine Einschaltsequenz der unterbrechungsfreien Stromversorgung abgewartet werden, bevor der Leistungsschalter wieder geöffnet werden durfte.

Es ist Aufgabe der vorliegenden Erfindung das unpraktische Starten der unterbrechungsfreien Stromversorgung über den Leistungsschalter zu verbessern.

Bei der eingangs genannten unterbrechungsfreien Stromversorgung wird die Aufgabe durch ein Eigenstartmittel, umfassend einen Signaleingang, eine Auswerteeinheit, ein Mittel zum Bereitstellen einer Hilfsspannung, ausgestaltet um ein Aufschalten des an den Ausgangsklemmbereich angeschlossenen Verbrauchers ohne Vorhandensein des Einspeise-Netzes zu ermöglichen. Mit dem Eigenstartmittel ist die unterbrechungsfreie Stromversorgung im Hinblick auf einen Eigenstart, einen Kaltstart oder einen Start aus der eigenen Batterie verbessert worden. Von einem Kaltstart bzw. einem Eigenstart wird im Sinne der Erfindung ein Start der unterbrechungsfreien Stromversorgung verstanden, wenn diese nicht selbst wiederum an eine Versorgungsspannung angeschlossen ist.

In einer weiteren Ausgestaltung der unterbrechungsfreien Stromversorgung ist an den Signaleingang ein Schaltmittel angeschlossen und die Auswerteeinheit ist ausgestaltet, ein Betätigen des Schaltmittels als eine Eigenstartaktion zu werten, wobei die Auswerteeinheit an das Mittel zum Bereitstellen der Hilfsspannung angeschlossen ist, und das Mittel zum Bereitstellen der Hilfsspannung ausgestaltet ist, auf ein Signal der Auswerteeinheit zu reagieren und dem Basisgerät die Hilfsspannung für einen Eigenstart zur Verfügung zu stellen. Durch einen Druck auf das Schaltmittel, beispielsweise einem Taster, lässt sich so eine unterbrechungsfreie Stromversorgung auch ohne das Vorhandensein eines Einspeise-Netzes komfortabel starten.

Um nach dem Startvorgang der unterbrechungsfreien Stromversorgung von einem ausgeschalteten Zustand in einen Betriebszustand für einen Pufferbetrieb des Verbrauchers zu wechseln, ist das Basisgerät ausgestaltet, mittels der Hilfsspannung diesen Wechsel von dem ausgeschalteten Zustand in den Pufferbetrieb, bei welchem das Batteriemodul den Verbraucher versorgt, zu wechseln.

Um die unterbrechungsfreie Stromversorgung im Hinblick auf eine Rückspannungsfestigkeit zu ertüchtigen, ist die Auswerteeinheit ausgestaltet, den Wechsel in den Pufferbetrieb bei Vorhandensein der Versorgungsspannung des Einspeise-Netzes zu unterdrücken.

Die eingangs genannte Aufgabe wird ebenfalls durch eine Netzersatzanlage, unabhängig von einem öffentlichen Stromnetz, mit einer unterbrechungsfreien Stromversorgung nach einem der Ansprüche 1 bis 4, aufweisend ein Stromerzeugungsaggregat mit einem Motor und einem Generator und einer Steuerschaltung für den Motor, wobei die Steuerschaltung als Verbraucher an den Ausgangsklemmbereich angeschlossen ist und eine Ausgangsspannung, welche vom Generator erzeugt wird, für einen Betrieb des Einspeise-Netzes auf den Eingangsklemmbereich zurückgekoppelt ist, gelöst.

Eine derartige Netzersatzanlage mit einer eigenstartfähigen unterbrechungsfreien Stromversorgung wird vorzugsweise als eine "Insellösung" eingesetzt. Insellösungen werden vorzugsweise bei mobilen Anlagen, wie beispielsweise Schiffen, Bohrinseln, Notunterkunftsquartieren, Trinkwassergewinnungsanlagen, usw. eingesetzt. Für eine Stromversorgung bei solch einer Insellösung hat es sich bewährt, Netzersatzanlagen, welche den benötigten Strom erzeugen, zu betreiben. Von Nachteil war es bisher bei den bekannten Netzersatzanlagen, dass diese bei einem erstmaligen Hochfahren keine Versorgungsspannung für eine Steuerschaltung für einen koordinierten Start des Motors hatten. Mit der unterbrechungsfreien Stromversorgung, welche die Steuerschaltung des Motors aufgrund eines Eigenstartes der unterbrechungsfreien Stromversorgung zur Verfügung stellt, hat man nun eine Möglichkeit, eine Insellösung einfach in Betrieb zu nehmen.

Die Zeichnung zeigt ein Ausführungsbeispiel, dabei zeigt die
- FIG 1: eine eigenstartfähige unterbrechungsfreie Stromversorgung und die
- FIG 2: eine Netzersatzanlage.

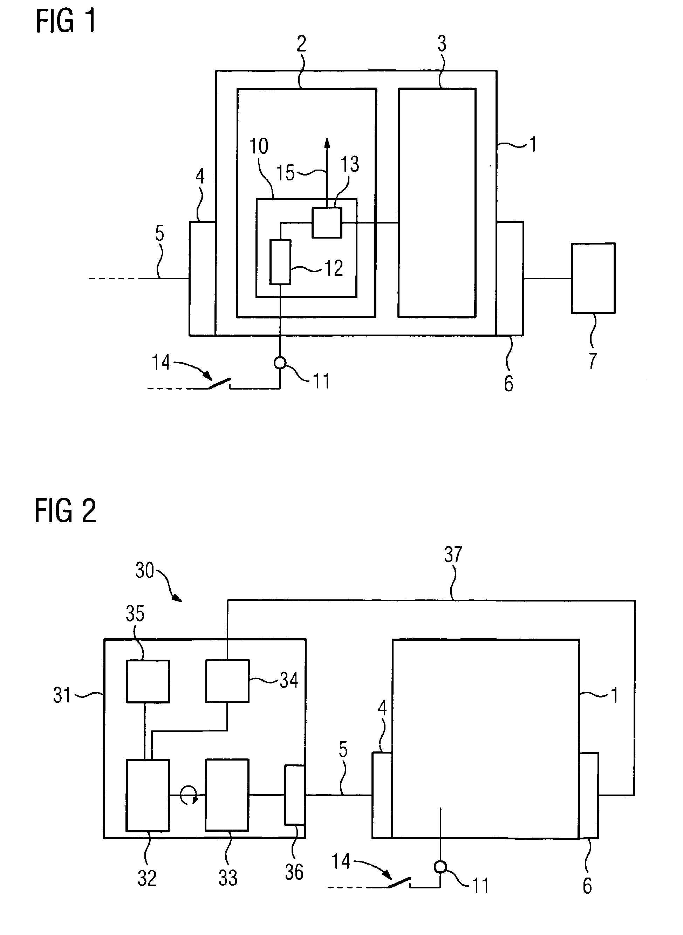

Gemäß FIG 1 ist eine unterbrechungsfreie Stromversorgung 1, umfassend ein Basisgerät 2, ein Batteriemodul 3, einen Eingangsklemmbereich 4 zum Anschluss an ein Einspeise-Netz 5, einen Ausgangsklemmbereich 6 zum Anschluss eines elektrischen Verbrauchers 7 dargestellt. Die unterbrechungsfreie Stromversorgung 1 ist dazu ausgestaltet, den Verbraucher 7 zu versorgen und zusätzlich bei Störungen in einer Versorgungsspannung des Einspeise-Netzes 5 die Versorgung mittels des Batteriemoduls 3 sicherzustellen. In einem Normalbetrieb schaltet die unterbrechungsfreie Stromversorgung 1 die Versorgungsspannung aus dem Einspeise-Netz zu dem Verbraucher 7 durch. Sollte das Einspeise-Netz 5 gestört sein und keine Versorgungsspannung mehr liefern können, so schaltet die unterbrechungsfreie Stromversorgung 1 um in einen Pufferbetrieb, was bedeutet, dass der angeschlossene Verbraucher 7 nun über den Ausgangsklemmbereich 6 mit einer Versorgungsspannung mittels des Batteriemoduls 3 versorgt wird.

Um die unterbrechungsfreie Stromversorgung 1 auch ohne Vorhandensein des Einspeise-Netzes 5 bzw. der Versorgungsspannung erstmalig zu starten, weist die unterbrechungsfreie Stromversorgung 1 ein Eigenstartmittel 10, umfassend einen Signaleingang 11, eine Auswerteeinheit 12, ein Mittel 13 zum Bereitstellen einer Hilfsspannung 15, auf. Das Eigenstartmittel 10 ist dabei ausgestaltet um ein Aufschalten des an den Ausgangsklemmbereich 6 angeschlossenen Verbrauchers 7 ohne Vorhandensein der Versorgungsspannung des Einspeise-Netzes 5 zu ermöglichen und somit mit einer Versorgungsspannung zu versorgen.

Dabei ist das Eigenstartmittel 10 derart ausgestaltet, dass an den Signaleingang 11 ein Schaltmittel 14 angeschlossen ist und die Auswerteeinheit 12 ist wiederum ausgestaltet, ein Betätigen des Schaltmittels 14 als eine Eigenstartaktion zu werten. Wurde diese Eigenstartaktion registriert, ist die Auswerteeinheit 12 ausgestaltet, an das Mittel 13 zum Bereitstellen der Hilfsspannung 15 ein Signal zu senden. Daraufhin stellt das Mittel 13 zum Bereitstellen der Hilfsspannung 15 die Hilfsspannung 15 für das Basisgerät 2 bereit. Das Basisgerät 2 kann nun eine Einschaltsequenz durchlaufen und auch ohne Vorhandensein des Einspeise-Netzes 5 bzw. dessen Versorgungsspannung von einem ausgeschalteten Zustand in einen Betriebszustand für einen Pufferbetrieb des Verbrauchers 7 wechseln.

Mit der FIG 2 ist eine Netzersatzanlage 30 abgebildet, welche beispielsweise auf Schiffen oder Bohrinseln zur Stromversorgung eingesetzt wird. Die Netzersatzanlage 30 weist die mit FIG 1 beschriebene unterbrechungsfreie Stromversorgung 1 auf. Um die Netzersatzanlage 30 erstmalig in Betrieb zu nehmen, ist die unterbrechungsfreie Stromversorgung 1 mit den Eigenstartmitteln (siehe FIG 1) versehen.

Für eine autarke Stromversorgung weist die Netzersatzanlage 30 ein Stromerzeugungsaggregat 31 auf. Das Stromerzeugungsaggregat 31 umfasst einen Motor 32, welcher mit einem Generator 33 gekoppelt ist. Treibt der Motor 32 den Generator 33 an, so wird mittels des Generators 33 eine Ausgangsspannung 36 bereitgestellt. Um den Motor 32 erstmalig zu starten, ist eine Steuerschaltung 34 für den Motor 32 vorhanden. Diese Steuerschaltung 34 kann aber nur betrieben werden, wenn sie über eine Spannungsversorgungsleitung 37 mit Spannung versorgt wird. Die Spannungsversorgungsleitung 37 ist aber wiederum an den Ausgangsklemmbereich 6 der unterbrechungsfreien Stromversorgung 1 angeschlossen. Da sich die unterbrechungsfreie Stromversorgung 1 vor der erstmaligen Inbetriebnahme noch in einem ausgeschalteten Zustand befindet, kann der Generator 33 nicht über den Motor 32 gestartet werden, weil die Steuerschaltung 34 nicht von der unterbrechungsfreien Stromversorgung 1 mit Spannung versorgt wird.

Um die Netzersatzanlage 30 bzw. Den Motor 32 erstmalig zu starten, wird an der unterbrechungsfreien Stromversorgung 1 ein Schaltmittel 14 betätigt. Das Schaltmittel 14 legt an den Signaleingang 11 ein Startsignal an, welches in der Auswerteeinheit 12 als eine Eigenstartaktion gewertet wird und die unterbrechungsfreie Stromversorgung wechselt mittels der in ihr erzeugten Hilfsspannung 15 von einem ausgeschalteten Zustand in einen Betriebszustand für einen Pufferbetrieb des Verbrauchers. In diesem Fall ist der Verbraucher die Steuerschaltung 34.

Ab jetzt ist die Steuerschaltung 34 mit Spannung versorgt und der Motor kann über eine Starterbatterie 35 angelassen werden. Läuft der Motor 32, treibt dieser den Generator 33 an, welcher wiederum eine Ausgangsspannung 36 bereitstellt, wobei die Ausgangsspannung 36 für einen Betrieb des Einspeise-Netzes 5 auf den Eingangsklemmbereich 4 zurückgekoppelt ist.

## Patentansprüche

1. Unterbrechungsfreie Stromversorgung (1), umfassend ein Basisgerät (2), ein Batteriemodul (3), einen Eingangsklemmbereich (4) zum Anschluss an ein Einspeise-Netz (5), einen Ausgangsklemmbereich (6) zum Anschluss eines elektrischen Verbrauchers (7) ausgestaltet den Verbraucher (7) zu versorgen und zusätzlich bei Störungen in einer Versorgungsspannung des Einspeise-Netzes (5) die Versorgung des elektrischen Verbrauchers (7) mittels des Batteriemoduls (3) sicherzustellen, **gekennzeichnet durch** ein Eigenstartmittel (10), umfassend einen Signaleingang (11), eine Auswerteeinheit (12), ein Mittel (13) zum Bereitstellen einer Hilfsspannung (15), ausgestaltet um ein Aufschalten des an den Ausgangsklemmbereich (6) angeschlossenen Verbrauchers (7) ohne Vorhandensein des Einspeise-Netzes (5) zu ermöglichen.

2. Unterbrechungsfreie Stromversorgung (1) nach Anspruch 1, wobei an den Signaleingang (11) ein Schaltmittel (14) angeschlossen ist und die Auswerteeinheit (12) ausgestaltet ist ein Betätigen des Schaltmittels (14) als eine Eigenstartaktion zu werten, wobei die Auswerteeinheit (12) an das Mittel (13) zum Bereitstellen der Hilfsspannung (15) angeschlossen ist, und das Mittel (13) zum Bereitstellen der Hilfsspannung (15) ausgestaltet ist auf ein Signal der Auswerteeinheit (12) zu reagieren und dem Basisgerät (2) die Hilfsspannung für einen Eigenstart zur Verfügung zu stellen.

3. Unterbrechungsfreie Stromversorgung (1) nach Anspruch 2, wobei das Basisgerät (2) ausgestaltet ist mittels der Hilfsspannung von einem ausgeschalteten Zustand in einen Betriebszustand für einen Pufferbetrieb des Verbrauchers (7) zu wechseln.

4. Unterbrechungsfreie Stromversorgung (1) nach einem der Ansprüche 1 bis 3, wobei die Auswerteeinheit (12) ausgestaltet ist den Wechsel in den Pufferbetrieb bei Vorhandensein der Versorgungsspannung des Einspeise-Netzes (5) zu unterdrücken.

5. Netzersatzanlage (30) unabhängig von einem öffentlichen Stromnetz mit einer Unterbrechungsfreie Stromversorgung (1) nach einem der Ansprüche 1 bis 4, aufweisend ein Stromerzeugungsaggregat (31) mit einem Motor (32) und einem Generator (33) und einer Steuerschaltung (34) für den Motor (32), wobei die Steuerschaltung (34) als Verbraucher (7) an den Ausgangsklemmbereich (6) angeschlossen ist und eine Ausgangsspannung, welche vom Generator (33) erzeugt wird, für einen Betrieb des Einspeise-Netzes (5) auf den Eingangsklemmenbereich (4) zurückgekoppelt ist.
